# EUROPEAN PATENT APPLICATION

(11) **EP 1 998 263 A1**
(43) Date of publication of application: **03.12.2008**
(21) Application number: 07710892.6
(22) Date of filing: 09.02.2007
(51) Int. Cl.: G06F 17/30

(54) **METHOD AND SYSTEM FOR BUILDING ARBORESCENCE FILE STRUCTURE IN COMPUTER**

(30) Priority: 23.02.2006 CN 200610008020
(71) Applicant: Wuxi Evermore Software, Inc, Wuxi City, Jiangsu Province 214028 (CN)
(72) Inventor: WU, Liangqiao, Wuxi, Jiangsu 214028 (CN)
(74) Representative: Price, Nigel John King
(86) International application number: PCT/CN2007/000465
(87) International publication number: WO 2007/095844

(57) **Abstract**

The present invention relates to a method and system for establishing tree file structure in a computer. The method executes the following steps: the computer invokes a panel generating program to establish a panel for displaying a tree structural of a file while it opens said file; said program invokes a file tree generating subprocess, and adds a file node corresponding to said file into said panel, wherein the displaying content of the file node is the file title of the file; said subprocess takes said file node as a root node and generates the tree structure of said file in said panel. The method can display the information of the opened files and documents, and display the relation between them so as to support the switching between the windows of each application document and avoid occurring improper operating. The system includes a panel creating module, a file node adding module and a tree structure generating module. The system may be used to implement the method for establishing tree file structure in the computer.

## Description

### FIELD OF THE TECHNOLOGY

The present invention relates to a method and system for establishing a tree file structure in the computer, and particularly to a method and system for establishing a tree file structure so as to display the opened files and subdocuments included in the files.

### BACKGROUND OF THE INVENTION

In the prior computer system, if application software opens a plurality of files at the same time, the application program buttons in the taskbar can be used to switch and view the window corresponding to each of the files. Along with the huge abundance of the electronic information content, the form of the electronic file presents diversification and the usage of the users is more convenient, for example, integration files. Integration file generally is to integrate a plurality of application documents to be one file in the software including a plurality of applications. The integration file may include various application documents, such as the excel document, the word processing document, the briefing making document and so on, and each of the electronic documents has its own document title.

After a plurality of integration files are opened at the same time, when the prior manner of switching the different documents by the application program buttons in the taskbar is used, the size of the buttons is changed to be too small to display the effective information in the buttons, which causes a difficulty in reading and managing the files. In addition, when there are documents with the same or similar title and application type in the different integration files, the user is generally confused, which causes improper operating. At the same time, the user can not distinguish the relation between the numerous documents, which causes the inconvenience of usage.

### SUMMARY OF THE INVENTION

The object of the present invention is to provide a method and system for establishing tree file structure in a computer to aim at the deficiencies of the above prior technology. The method and system can display the corresponding information of the opened files and documents, and the relation between them so as to support the switching between the windows of application documents and avoid occurring improper operations.

In order to accomplish the above object, the present invention provides a method for establishing tree file structure in the computer, which includes the following steps:
step 1, the computer invokes a panel generating program to create a panel for displaying a tree structure of a file while it opens said file;
step 2, said program invokes a file tree generating subprocess, and adds a file node corresponding to said file into said panel, wherein a displaying content of the file node is a file title of the file; and
step 3, said subprocess takes said file node as a root node and generates the tree structure of said file in said panel.

Said step3 concretely includes the following steps:
step 31, the computer judges whether said file includes an integration file; if yes, the step 32 is executed; otherwise the procedure is ended; and
step 32, the tree structure of said integration file is displayed on a screen in accordance with a structure parameter among application documents in said integration file.

Said step 32 concretely includes the following steps:
step 321, the application document included in said integration file is extracted;
step 322, it is judged whether an application type child node corresponding to said application document exists in an integration file child node; if yes, the step 324 is executed; otherwise the step 323 is executed;
step 323, the application type child node corresponding to said application document is added into said integration file child node;
step 324, an application document child node is added into said application type child node; and
step 325, it is judged whether there are more application documents; if yes, the step 321 is executed; otherwise the procedure ends.

Said step 323 concretely is to add the application type child node corresponding to said application document into said integration file child node, wherein the displaying content of said application type child node is the name of application type.

Said step 324 concretely is to add the application document child node into said application type child node, wherein the displaying content of said application document child node is a title of the document.

After said step32, the method further includes the following steps:
step 33, it is judged whether said file comprises a two-dimensional table; if yes, the step 34 is executed; otherwise the procedure is ended; and
step 34, the tree structure of said two-dimensional table is displayed on the screen in accordance with the structure parameter among application documents in said two-dimensional table.

Said step 34 concretely includes the following steps:
step 341, all the two-dimensional tables included in said file are extracted; and
step 342, child nodes corresponding to said two-dimensional tables are established in said file node.

Said step 342 concretely is to establish the child nodes corresponding to said two-dimensional tables in said file node, wherein the displaying contents of the child nodes of said two-dimensional tables are the titles of the two-dimensional tables.

After said step 34, the method further includes that the computer deletes the node corresponding to the file in said panel while it closes said file.

The effective information of the files or documents can be entirely displayed in the file structure tree, which is scarcely limited by the number of the opened files, and avoids the limitations of displaying information in the application program buttons in the taskbar. Selecting the nodes of the files or documents by mouse-clicking or the keyboard, the corresponding windows can be selected and displayed quickly and exactly, and it is convenient for switching between the windows of each file or document.

For the integration file, the file structure tree displays the document composing structure of the integration file, which avoids improper judgments and operations caused by the reasons, such as similar document titles and the like.

In the nodes of the files or documents in the file structure tree, the current status of the windows corresponding to the files or documents may be distinguished by using different icons including hiding, closing, displaying and so on, which makes the condition of the files be clear at a glance.

In the node, a shortcut menu corresponding to it may be used so as to be convenient for accomplishing stronger management functions. These functions include the operations, such as newly creating, opening, closing, renaming, deleting, hiding and unhiding on the file or document.

In order to accomplish the above object, the present invention also provides a system for establishing tree file structure in the computer, which includes a panel creating module, a file node adding module and a tree structure generating module. The panel creating module is adapted to create a tree structural panel for displaying an opened file; the file node adding module is adapted to add a file node corresponding to said file into the panel created by said panel creating module; and the tree structure generating module is adapted to take the file node added by said file node adding module as a root node, and generate a tree structure of said file in said panel.

The tree file structure is established in the computer by creating the panel by the panel creating module in the above system, adding the file node by the file node adding module and generating file tree structure in the panel by the tree structure generating module.

The present invention will be described in more details with reference to the drawings and embodiments.

### BRIEF DESCRIPTION OF THE DRAWINGS

Fig.1 is a flowchart of an embodiment of a method for establishing tree file structure in a computer according to the present invention;
Fig.2 is a schematic drawing of an embodiment of a file structure tree established in a method for establishing tree file structure in a computer according to the present invention;
Fig.3 is a structure drawing of one preferable embodiment of a system for establishing tree file structure in a computer according to the present invention;
Fig.4 is a structure drawing of another preferable embodiment of a system for establishing tree file structure in a computer according to the present invention;
Fig.5 is a structure drawing of a preferable embodiment of a tee structure displaying module in the system for establishing tree file structure in a computer according to the present invention; and
Fig.6 is a structure drawing of another preferable embodiment of a system for establishing tree file structure in a computer according to the present invention.

### DETAILED DESCRIPTION OF THE PREFERRED EMBODIMENTS

The present invention provides a method for establishing tree file structure in a computer, which displays the corresponding information of the opened files and documents, and the relations between them so as to support the switching between the windows of application documents and avoid occurring improper operating.

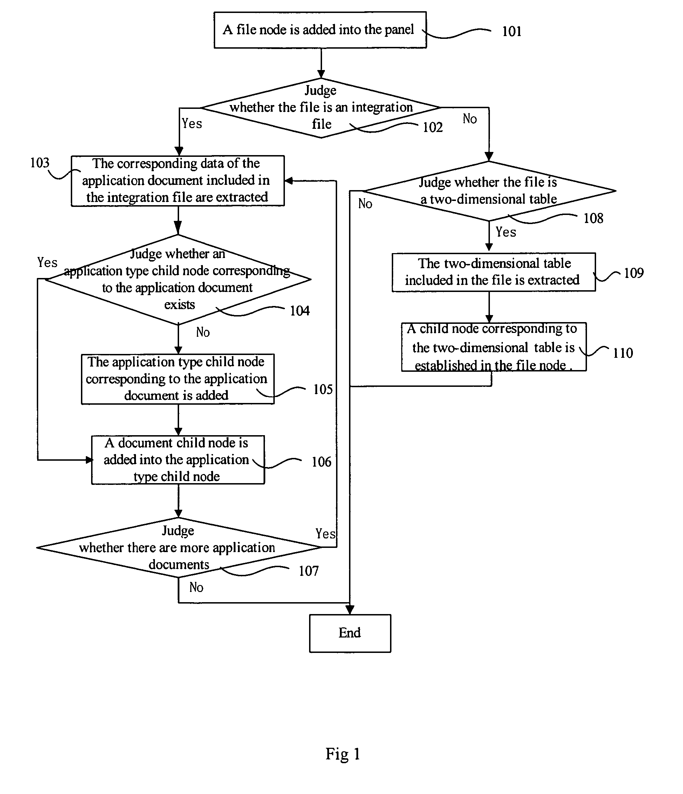

As shown in Fig.1, it is a flowchart of an embodiment of the method for establishing tree file structure in a computer according to the present invention, which executes the following steps:
step 101, while the computer opens a file, it adds a file node into a panel. The file node corresponds to said file, and the displaying content of the file node is the file title of the file. The panel is a navigation panel, which is a recipient component for placing the structure tree. When the navigation panel is displayed, the structure tree actually is created automatically, and here it only includes one node, i.e. a root node. The displaying content of the root node is "opened file". Here the root node does not include any file nodes, and all the nodes of the files created subsequently are child nodes of the root node;
step102, the computer judges whether the file is an integration file. If yes, the computer extracts the number of the application documents from the data in the integration file, and the step 103 is executed; otherwise the step 108 is executed;
step 103, the corresponding data of the application document included in the integration file are extracted, which include the application type sign and document title of the application documents and so on;
step 104, it is judged whether an application type child node corresponding to the application document exists in the integration file child node. If yes, the step 106 is executed; otherwise the step 105 is executed;
step 105, the application type child node corresponding to the application document in the step 103 is added into the integration file child node. The displaying content of the application type child node directly is the name of the application type. For example, the application type node of the word processing document displays "word processing"; the application type node of the excel document displays "excel" and so on;
step 106, a document child node is added into the application type child node. The displaying content of the document child node is the document title. If the document further includes two-dimensional table, each two-dimensional table child node corresponding to the two-dimensional table included in the document is added, and the displaying content of the two-dimensional table child node is the title of the corresponding two-dimensional table;
step 107, it is judged whether there are more application documents. If yes, the step 103 is executed; otherwise the procedure is ended;
step 108, it is judged whether the file includes the two-dimensional table, for example, the work table included in the excel document. If yes, the step 109 is executed; otherwise the procedure ends;
step 109, the two-dimensional table included in the file is extracted; and
step 110, the child node corresponding to the two-dimensional table is established in the file node.

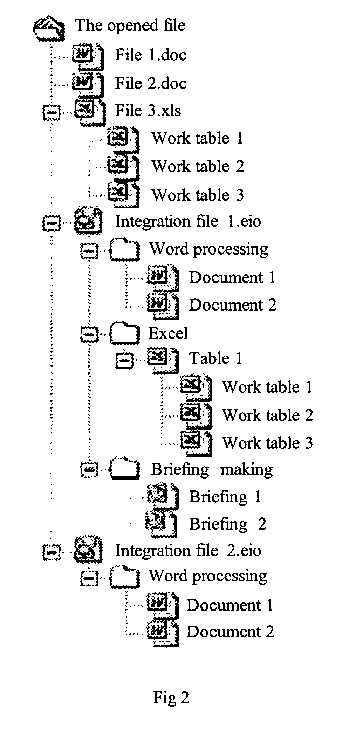

As shown in Fig.2, it is the file structure tree established in the present embodiment, which includes five files. The file 1 and the file 2 are word processing files. The file 3 is an excel file including three work tables. It also includes two integration files, the integration 1 and integration file 2. The integration file 1 includes the document, the work table and the briefing, therefore, three application type nodes are established in the catalog of the integration file 1, which are the word processing, the excel and the briefing making respectively. The integration file 2 only includes the word processing application document.

The application range of the method is broad, which may directly adjust the files on the established file structure tree, the two-dimensional tables in the files and the order of the documents in the integration file in the form of dragging and dropping with the mouse.

After several files are opened, there are many file nodes in the structure tree. Sometimes, in order to often operate some files, parts of the file nodes may be moved to the front so as to be convenient for operating.

When the file includes a plurality of two-dimensional tables, sometimes, for the different purposes, the position of some tables needs to be changed. It is more convenient moving the nodes in the structure tree than directly moving them in the windows.

When the integration file includes a plurality of documents with a certain application type, sometimes, for the different purposes, it is needed to change the displaying order of the document nodes in the application type node. By dragging and dropping with the mouse, the document is dragged and dropped to the front or the back of another document in the integration file. The order of the documents may be changed and any contents influencing the document may be not changed.

In addition, the files or documents may be moved or copied, in the structure tree, to a certain integration file, which can make or modify the required integration file quickly.

When one integration file needs to be made, some original documents needed may be documents in other files or the integration file. The structure tree may be used to complete making the integration file. At first, the needed file or integration file is opened and the corresponding node appears in the structure tree. Then one blank integration file is created. The needed file or document is moved to the integration file by using the mouse or keyboard, and the manner of copying or moving may be used according to the need. The new integration file can be completed quickly.

The similar method may be used to modify the integration file.

The management of the file and the integration file becomes very convenient and rapid by the functions provided by the navigation panel.

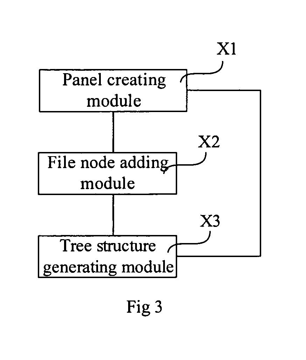

Fig.3 is a structure drawing of one preferable embodiment of the system for establishing tree file structure in a computer according to the present invention. The system for establishing tree file structure in the computer includes a panel creating module X1, a file node adding module X2 and a tree structure generating module X3. While the computer opens a file, the panel creating module X1 creates a panel for displaying a tree structure of the opened file. The file node adding module X2 adds a file node corresponding to the opened file into the panel created by the panel creating module X1, and the displaying content of the file node is the file title of the opened file. The tree structure generating module X3 takes the file node added by the file node adding module X2 as a root node, and generates a tree structure of the opened file in the panel created by the panel creating module X1.

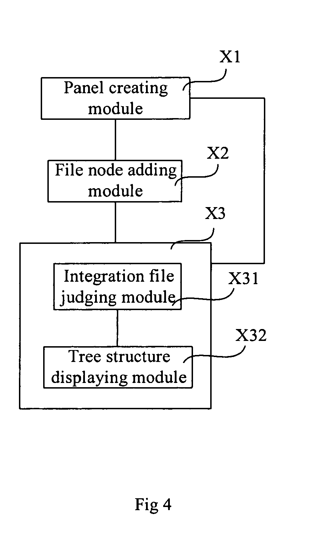

In the above system for establishing tree file structure in the computer, the tree structure generating module may further be provided with an integration file judging module and a tree structure displaying module. As shown in Fig.4, the tree structure generating module X3 includes an integration file judging module X31 and a tree structure displaying module X32. The integration file judging module X31 judges whether said opened file includes a integration file; if the judging result of the integration file judging module X31 is yes, i.e. the opened file includes the integration file, the tree structure displaying module X32, according to a structure parameter among application documents of the integration file in the opened file, generates the tree structure of said integration file and displays the tree structure of said integration file on the screen.

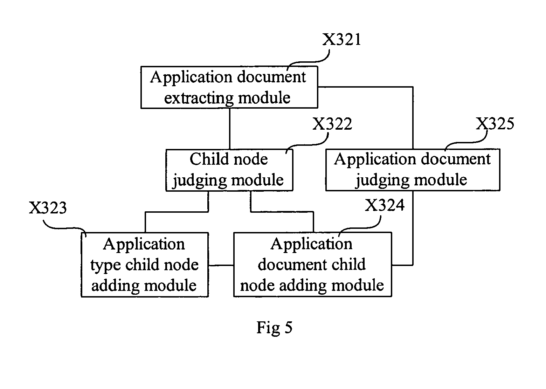

In the above tree structure adding module, the tree structure displaying module may further be provided with an application document extracting module, a child node judging module, an application type child node adding module, an application document child node adding module and an application document judging module. As shown in Fig.5, the tree structure displaying module X32 includes an application document extracting module X321, a child node judging module X322, an application type child node adding module X323, an application document child node adding module X324 and an application document judging module X325. The application document extracting module X321 extracts the application document included in the integration file. The child node judging module X322 judges whether an application type child node corresponding to said application document exists in said integration file child node; if it does not exist, the application type child node adding module X323 adds the application type child node corresponding to said application document into the integration file child node; if it exists, the application document child node adding module X324 adds the application document child node into said application type child node. The application document judging module X325 judges whether there is further an application document in the integration file; if yes, the application document extracting module X321 continues extracting the application document included in the integration file till all the application documents are extracted.

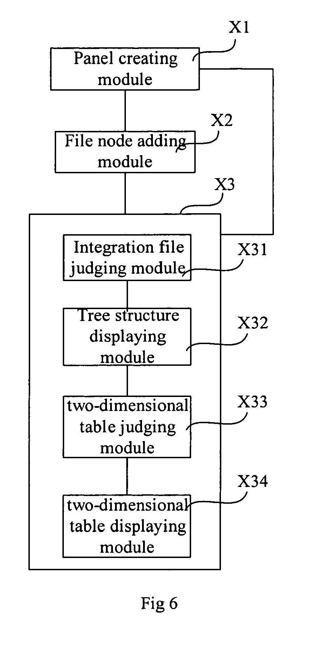

The tree structure generating module is further provided with a two-dimensional table judging module and a two-dimensional table displaying module. As shown in Fig.6, the tree structure generating module X3 is further provided with a two-dimensional table judging module X33 and a two-dimensional table displaying module X34. The two-dimensional table judging module X33 judges whether the opened file includes a two-dimensional table; if it exists, the two-dimensional table displaying module X34 displays the tree structure of the two-dimensional table on the screen in accordance with the structure parameter among application documents of the two-dimensional table in said opened file.

The two-dimensional table displaying module may further be provided with a two-dimensional table extracting module and a two-dimensional table child node establishing module. The two-dimensional table extracting module extracts all the two-dimensional tables included in the opened file. The two-dimensional table child node establishing module establishes child nodes corresponding to all the two-dimensional tables extracted by the two-dimensional table extracting module in the file node.

The tree structure generating module may be further provided with a node deleting module. The node deleting module deletes the nodes corresponding to the file in said panel while the computer closes the opened file.

Each above system for establishing tree file structure in the computer can be used for implementing establishing the tree file structure in the computer.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method for establishing tree file structure in computer, comprising the following steps:
step 1, the computer invoking a panel generating program to create a panel for displaying a tree structure of a file while opening said file;
step 2, said panel generating program invoking a file tree generating subprocess, and adding a file node corresponding to said file into said panel, wherein a displaying content of the file node is a file title of said file; and
step 3, said subprocess taking said file node as a root node and generating the tree structure of said file in said panel.

2. The method according to claim 1, wherein said step 3 concretely comprises the following steps:
step 31, the computer judging whether said file comprises an integration file; if yes, executing the step 32; otherwise ending the procedure; and
step 32, displaying the tree structure of said integration file on a screen in accordance with a structure parameter among application documents in said integration file.

3. The method according to claim 2, wherein said step 32 concretely comprises the following steps:
step 321, extracting the application document included in said integration file;
step 322, judging whether a application type child node corresponding to said application document exists in an integration file child node; if yes, executing the step 324; otherwise executing the step 323;
step 323, adding the application type child node corresponding to said application document into said integration file child node;
step 324, adding an application document child node into said application type child node; and
step 325, judging whether there are more application documents; if yes, executing the step 321; otherwise ending the procedure.

4. The method according to claim 3, wherein said step 323 concretely comprises adding the application type child node corresponding to said application document into said integration file child node, wherein the displaying content of said application type child node is the name of application type.

5. The method according to claim 3, wherein said step 324 concretely comprises adding the application document child node into said application type child node, wherein the displaying content of said application document child node is a title of the document.

6. The method according to claim 2, wherein after said step 32, the method comprises the following steps:
step 33, judging whether said file comprises a two-dimensional table; if yes, executing the step 34; otherwise ending the procedure; and
step 34, displaying a tree structure of said two-dimensional table on the screen in accordance with a structure parameter among application documents in said two-dimensional table.

7. The method according to claim 6, wherein said step 34 concretely comprises the following steps:
step 341, extracting all the two-dimensional tables included in said file; and
step 342, establishing child nodes corresponding to said two-dimensional tables in said file node.

8. The method according to claim 7, wherein said step 342 concretely comprises establishing the child nodes corresponding to said two-dimensional tables in said file node, wherein the displaying contents of the child nodes of said two-dimensional tables are the titles of the two-dimensional tables.

9. The method according to claim 6, 7 or 8, wherein after said step 34, the method further comprises:
the computer deleting the node corresponding to the file in said panel while closing said file.

10. A system for establishing tree file structure in computer, comprising:
a panel creating module adapted to create a panel with a tree structure for displaying a opened file;
a file node adding module adapted to add a file node corresponding to said file into the panel created by said panel creating module; and
a tree structure generating module adapted to take the file node added by said file node adding module as a root node, and generate the tree structure of said file in said panel.

11. The system according to claim 10, wherein said tree structure generating module concretely comprises:
an integration file judging module adapted to judge whether said file includes an integration file; and
a tree structure displaying module adapted to display the tree structure of said integration file on a screen in accordance with the judging result of said integration file judging module.

12. The system according to claim 11, wherein said tree structure displaying module concretely comprises:
an application document extracting module adapted to extract an application document included in said integration file;
a child node judging module adapted to judge whether an application type child node corresponding to said application document exists in an integration file child node;
an application type child node adding module adapted to add the application type child node corresponding to said application document into said integration file child node in accordance with the judging result of said child node judging module;
an application document child node adding module adapted to add the application document child node into said application type child node in accordance with the judging result of said child node judging module; and
an application document judging module adapted to judge whether there are more application documents.

13. The system according to claim 11, wherein said tree structure generating module further comprises:
a two-dimensional table judging module adapted to judge whether said file includes a two-dimensional table; and
a two-dimensional table displaying module adapted to display a tree structure of said two-dimensional table on the screen in accordance with the judging result of said two-dimensional table judging module.

14. The system according to claim 13, wherein said two-dimensional table displaying module further comprises:
a two-dimensional table extracting module adapted to extract all the two-dimensional tables included in said file;
a two-dimensional table child node establishing module adapted to establish child nodes corresponding to all the two-dimensional tables extracted by said two-dimensional table extracting module in said file node.

15. The system according to claim 13 or 14, wherein said tree structure generating module further comprises a node deleting module adapted to delete the node corresponding to the file in said panel.
